# EUROPÄISCHE PATENTSCHRIFT

(11) **EP 0 515 979 B1**
(45) Veröffentlichungstag und Bekanntmachung des Hinweises auf die Patenterteilung: **12.04.1995**
(21) Anmeldenummer: 92108563.5
(22) Anmeldetag: 21.05.1992
(51) Int. Cl.: B62B 5/06, B62B 3/10

(54) **Transportwagen, insbesondere Einkaufswagen**
Trolley, especially shopping trolley
Chariot, particulièrement chariot d'achat

(30) Priorität: 31.05.1991 DE 9106701 U
(43) Veröffentlichungstag der Anmeldung: 02.12.1992
(73) Patentinhaber: Wanzl GmbH & Co. Entwicklungs-KG, D-89336 Leipheim (DE)
(72) Erfinder: Wanzl, Rudolf, W-8874 Leipheim (DE); Quack, Klaus Jürgen, W-8878 Bibertal (DE)

(56) Entgegenhaltungen:
- DE-U- 8 617 105
- US-A- 2 962 827
- US-A- 4 683 609

## Beschreibung

Die Erfindung betrifft einen Transportwagen, insbesondere einen Einkaufswagen, mit einem Fahrgestell, mit wenigstens einer Abstellfläche z.B. in Form eines Behälters und/oder einer Ladeplattform und mit einer Schiebeeinrichtung in Form eines rohr- oder stabförmigen Handgriffes, der an beiden Enden von je einem Griffträger gehalten wird und die Griffträger an je einem Tragteil befestigt sind und ein Informationsträger vorgesehen ist, auf dem die zur Identifizierung des Transportwagens erforderlichen Informationen wie Baujahr, Typbezeichnung, Eigentümer usw. angebracht sind.

Transportwagen dieser Art sind insbesondere als Einkaufswagen bekannt. Um solche Transportwagen jederzeit identifizieren zu können, sind inzwischen Vorschriften erlassen worden, die an jedem dieser Transportwagen einen Informationsträger vorschreiben, auf dem Informationen wie Typbezeichnung, Baujahr, Artikelnummer, Eigentümer usw. anzugeben sind. Solche Informationen sind gewöhnlich bei vielen Geräten, Maschinen, Apparaten u.dgl. üblich, so daß an dieser Stelle auf die Beschreibung des näheren Zwecks solcher Informationen verzichtet werden kann. Bei Transportwagen der vorliegenden Art sind die Informationsträger bisher entweder in Form von aufnietbaren Blechschildern, oder von aufklebbaren Folien oder als in Vertiefungen oder Durchbrüchen einrastbare Plättchen bekannt. Alle genannten Informationsträger weisen Nachteile auf.
So erfordert das Aufnieten von Blechschildern, abgesehen von den nicht unerheblichen Stückkosten, einen relativ hohen Montageaufwand, der bei Massenartikeln, wie Einkaufswagen, unerwünscht ist.
Aufklebbare Folien, wie sie an ebenen senkrechten Flächen von Transportwagen der Anmelderin angebracht wurden, haben sich nicht als optimal erwiesen, weil sie beim Gebrauch der Transportwagen zerkratzt und damit unleserlich gemacht werkönnen.

Auch die in Durchbrüchen einrastbaren plättchenförmigen Informationsträger erfüllen nicht die Forderung nach einer dauerhaften Kennzeichnung. Es hat sich gezeigt, daß sich die aus Kunststoff gefertigten Informationsträger im Laufe der Zeit, vermutlich aufgrund von Schrumpfung, aus den Durchbrüchen lösen und verloren gehen. Auch das Anfahren an Hindernisse mit dem Transportwagen führt zum Verlust solcher Informationsträger.

Es ist inzwischen von der Anmelderin vorgeschlagen worden, den Informationsträger innerhalb des Handgriffes unterzubringen und zwar als papierenes Einlegeteil, auf dem neben den erforderlichen Informationen z.B. auch firmenspezifische Symbolik oder Werbeaussagen aufgedruckt sein können. Solchermaßen gestaltete Handgriffe, bei denen das Einlegeteil durch einen glasklaren Kunststoffschlauch abgedeckt ist, sind dem Fachmann als "Werbegriffe" bekannt.
Auch der eben zitierte Vorschlag scheint nicht optimal zu sein, da bemängelt wird, daß durch das zusätzliche Aufdrucken der zur Identifizierung der Transportwagen erforderlichen Informationen ein nicht unerheblicher Platz für das Anbringen der erwähnten Werbeaussagen oder sonstiger Symbolik verloren geht. Befinden sich an den Handgriffen der Transportwagen auch noch sog. "Münzpfandschlösser", die bekanntlich ein gegenseitiges An- und Abkoppeln der Transportwagen ermöglichen, geht weiterer Platz für Werbeangaben verloren. Beim Schieben der Transportwagen schließlich werden durch die Hände der den Wagen führenden Person weitere Flächen des Handgriffes abgedeckt, so daß zu befürchten ist, daß der durch die Werbeaussagen beabsichtigte Werbeeffekt zunichte gemacht wird.

Die Aufgabe der Erfindung besteht deshalb darin, am Transportwagen der gattungsgemäßen Art einen Platz zu finden, an dem der Informationsträger so untergebracht werden kann, daß er im Laufe der Zeit weder beschädigt noch verloren gehen kann, wobei die eben geschilderten Nachteile der bekannten Lösungen vermieden werden sollen.

Die Aufgabe ist erfindungsgemäß dadurch gelöst, daß wenigstens einer der beiden Griffträger ein durchsichtiges Abdeckteil aufweist, das unverlierbar auf den Griffträger aufsetzbar ist und daß zwischen dem Griffträger und dem Abdeckteil ein Raum zur Aufnahme des Informationsträgers gebildet ist.

Der Vorteil der Erfindung besteht darin, daß der Informationsträger unverlierbar und vor Beschädigungen geschützt am Transportwagen an exponierter Stelle untergebracht werden kann, ohne daß dadurch am Handgriff der für Werbeangaben vorgesehene Platz eine Beeinträchtigung erfährt. Der Vorteil der Erfindung wird umso bedeutsamer, wenn man bedenkt, daß der Käufer von Transportwagen für das Anbringen von Werbeangaben gewöhnlich einen Aufpreis bezahlen muß. Es ist daher verständlich, wenn der Käufer diese Werbefläche nicht beeinträchtigt, sondern so groß wie irgendwie möglich gestaltet wissen will.

Die Erfindung wird anhand von drei Ausführungsbeispielen näher erläutert. Es zeigt
- Fig. 1: einen als Einkaufswagen gestalteten Transportwagen;
- Fig. 2: in teilweise geschnittener Darstellung einen Griffträger mit Abdeckteil;
- Fig. 3: ein Detail aus der Anordnung gemäß Fig. 2;
- Fig. 4: in teilweise geschnittener Darstellung und mit Detailansicht einen weiteren Griffträger mit Abdeckteil;
- Fig. 5: einen Griffträger mit seitlicher Anordnung des Abdeckteiles sowie
- Fig. 6: eine Schnittdarstellung des Griffträgers mit Abdeckteil gemäß der Ausführung nach Fig. 5

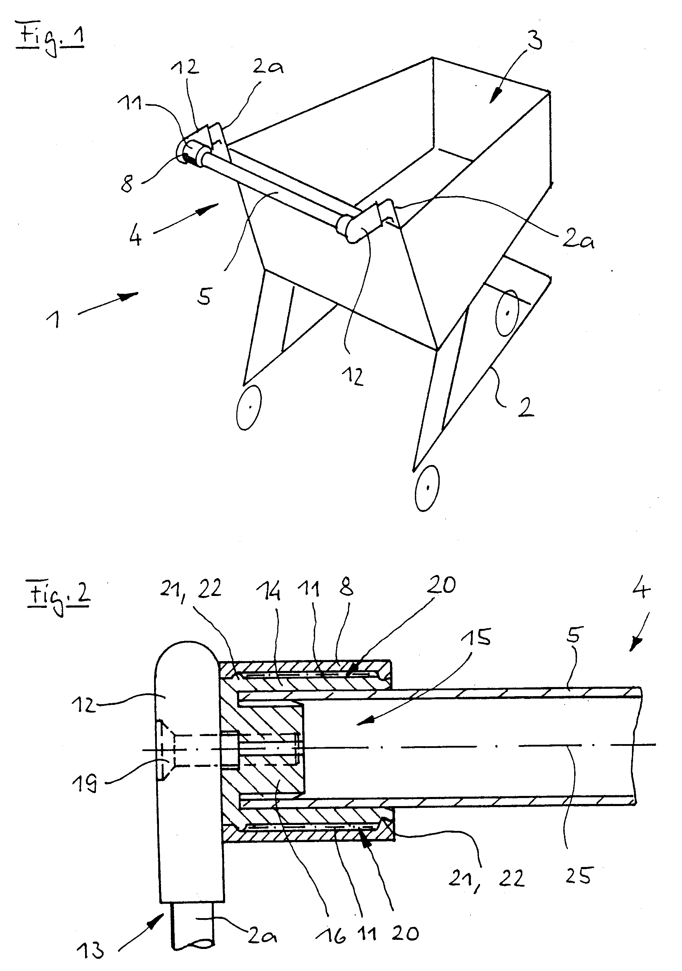

Der in Fig. 1 als Einkaufswagen dargestellte Transportwagen 1 steht stellvertretend für alle Arten von Transportwagen 1, deren Schiebeeinrichtung 4 im wesentlichen durch einen rohr- oder stabförmigen Handgriff 5 gebildet ist. Alle diese Transportwagen 1 sind mit einem Fahrgestell 2 ausgestattet, das wie üblich, wenigstens eine zum Abstellen von Ware gedachte Abstellfläche 3 in Form eines Behälters und/oder einer Ladeplattform aufweist. Die Transportwagen 1 sind in bekannter Weise so gestaltet, daß sie sich platzsparend ineinanderschieben lassen. Der Handgriff 5 ist gewöhnlich quer zur Schieberichtung des Transportwagens 1 angeordnet und wird in bekannter Weise von zwei Griffträgern 12 getragen, die auf bewährte Art, jeweils auf ein Tragteil 2a aufgesteckt, entweder am Behälter oder an nach oben gerichteten, nicht näher dargestellten Trägern des Fahrgestelles 2 ortsfest angeordnet sind. Die Griffträger 12 sowie der Handgriff 5 bilden in bekannter Weise die Schiebeeinrichtung 4 des Transportwagens 1. Wenigstens einer der beiden Griffträger 12 beinhaltet den zur Identifizierung des Transportwagens 1 erforderlichen Informationsträger 11, der, wie nachfolgend näher beschrieben wird, gegen äußere schädliche Einflüsse geschützt, von einem durchsichtigen Abdeckteil 8 abgedeckt wird.

In einer Draufsicht im Schnitt zeigt Fig. 2 einen Griffträger 12 mit einem Abdeckteil 8 und mit einem Informationsträger 11, der strichpunktiert gezeichnet ist. Der Griffträger 12 weist im Beispiel einen bekannten taschenförmig gestalteten Aufnahmebereich 13 für ein Tragteil 2a auf, wie in Fig. 1 erwähnt. Im rechten Winkel zum Aufnahmebereich 13 angeordnet erstreckt sich waagrecht ein buchsenförmiger Ansatz 14, dessen Innenraum 15 in bekannter Weise zur Aufnahme eines Endes des Handgriffes 5 ausgebildet ist. Eine in diesem Innenraum 15 vorgesehene, durch eine Schraube 19 beeinflußbare Spreizeinrichtung 16 dient zur Befestigung des Handgriffes 5. Diese Art der Befestigung ist ebenfalls bekannt. Auf den buchsenförmigen Ansatz 14 ist erfindungsgemäß ein hohlzylinderförmiges Abdeckteil 8 schnappschlüssig und damit unverlierbar aufgesetzt. Um diese Art der Verbindung zu ermöglichen, sind an der Außenmantelfläche des buchsenförmigen Ansatzes 14 und an der Innenmantelfläche des Abdeckteiles 8 wenigstens je eine ringförmige, konzentrische Erhebung 21 und Vertiefung 22 vorgesehen, die miteinander korrespondieren und somit bewirken, daß beim Aufstecken des Abdeckteiles 8 die ringförmigen Erhebungen 21 in die ringförmigen Vertiefungen 22 und umgekehrt einrasten. Der buchsenförmige Ansatz 14 und das Abdeckteil 8 sind so gestaltet, daß in aufgesetztem Zustand des Abdeckteiles 8 zwischen der Außenmantelfläche des buchsenförmigen Ansatzes 14 und der Innenmantelfläche des Abdeckteiles 8 ein Raum 20 zur Aufnahme eines papierenen oder papierähnlichen Informationsträgers 11 gebildet ist. Das Abdeckteil 8 ist durchsichtig gestaltet, so daß der im Raum 20 befindliche Informationsträger 11 lesbar bleibt. Die schnappschlüssige Verbindung von Griffträger 12 und Abdeckteil 8 bewirkt, daß der Informationsträger 11 gegen äußere Einflüsse und gegen Verlust geschützt im Raum 20 untergebracht ist. Die ringförmigen Vertiefungen 22 und Erhebungen 21 garantieren aufgrund ihres gegenseitigen Formschlusses, daß kein Regenwasser zum Informationsträger 11 vordringen kann. Bei der Montage der Schiebeeinrichtung 4 wird der Informationsträger 11 einfach um den buchsenförmigen Ansatz 14 gelegt und anschließend das Abdeckteil 8, in der Zeichnung von rechts nach links, auf den buchsenförmigen Ansatz 14 (mit Informationsträger 11) aufgedrückt.

In einem Schnitt quer zur Längsachse 25 des Handgriffes 5, siehe Fig. 2 und damit quer zur Längsachse 25 des buchsenförmigen Ansatzes 14 des Griffträgers 12 zeigt Fig. 3 eine vorteilhafte Ausgestaltung des buchsenförmigen Ansatzes 14. Um zu vermeiden, daß der im Raum 20 befindliche Informationsträger 11 entlang der äußeren Mantelfläche des buchsenförmigen Ansatzes 14 nach unten rutscht und damit die Informationen schwer oder schlecht lesbar sind, wird vorgeschlagen, zu beiden Seiten der Längsachse 25 an der Außenmantelfläche des buchsenförmigen Ansatzes 14 je einen parallel zur Längsachse 25 verlaufenden Steg 26 vorzusehen, wobei beide Stege 26 als Anschläge für den Informationsträger 11 dienen und diesen in seiner Lage fixieren. Die Stege 26 sind nur so hoch, daß das Abdeckteil 8 trotzdem auf den buchsenförmigen Ansatz 14 schnappschlüssig aufgesetzt werden kann.

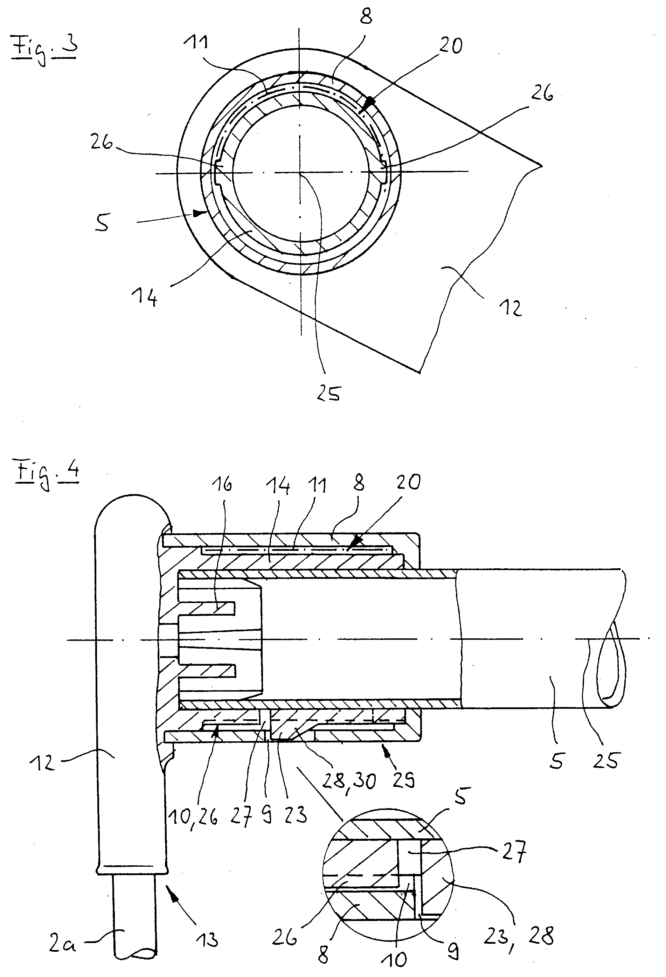

In Fig. 4 ist ein weiteres vorteilhaftes Ausführungsbeispiel eines Griffträgers 12 und eines durchsichtigen Abdeckteiles 8 gezeigt, wobei ein Teil des im Griffträger 12 gelagerten Handgriffes 5 ebenfalls dargestellt ist. Der Griffträger 12 ist wieder mit einem Aufnahmebereich 13, mit einem buchsenförmigen Ansatz 14 sowie mit einer Spreizeinrichtung 16 ausgestattet. Anstelle von konzentrischen Erhebungen 21 und Vertiefungen 22, wie sie in Fig. 2 beschrieben sind, ist im unteren Bereich des buchsenförmigen Ansatzes 14 eine parallel zur Längsachse 25 des Handgriffes 5 angeordnete Zunge 28 vorgesehen. Die Zunge 28 ist an ihrem in der Zeichnung rechts angeordneten Ende 29 an den buchsenförmigen Ansatz 14 angeformt. Der restliche Abschnitt der Zunge 28 ragt in eine am buchsenförmigen Ansatz 14 befindliche Öffnung 27 und läßt sich daher zur Längsachse 25 des Handgriffes 5 hin federnd verschwenken. An ihrem freien Ende 30 trägt die Zunge 28 einen Vorsprung 23. Auf dem buchsenförmigen Ansatz 14 ist das hohlzylinderförmige Abdeckteil 8 unverlierbar aufgesetzt. Um dies zu ermöglichen, weist das Abdeckteil 8 an seiner Mantelfläche einen Durchbruch 9 auf, in welchen der Vorsprung 23 der Zunge 28 eingerastet ist. In zweckmäßiger Weise ist auf der Zunge 28 und in Längsrichtung der Zunge 28 sich erstreckend, auf dem buchsenförmigen Ansatz 14, ein etwas erhöhter Steg 26 vorgesehen, der beim Aufschieben des Abdeckteiles 8 auf den buchsenförmigen Ansatz 14 in einer an der zylindrischen Innenwand des buchsenförmigen Ansatzes 14 befindlichen, entlang zur Längsachse 25 des Handgriffes 5 sich erstreckenden Nut 10 geführt ist. Der Steg 26 kann auch in einem Abstand zur Zunge 28 angeordnet, in Längsrichtung des Handgriffes 5 verlaufend, auf dem buchsenförmigen Ansatz 14 vorgesehen sein. Entsprechend ist dann die Nut 10 in einem Abstand zum Durchbruch 9 angeordnet. Durch diese Maßnahmen ist sichergestellt, daß die beim Aufschieben des Abdeckteiles 8 zum Innenraum des buchsenförmigen Ansatzes 14 ausweichende Zunge 28 bei Erreichen der Endlage des Abdeckteiles 8 mit ihrem Vorsprung 23 zurück in den Durchbruch 9 des Abdeckteiles 8 federt und zusammen mit der Nut 10 und dem Steg 26 verhindert, daß das Abdeckteil 8 weder verdreht, noch vom buchsenförmigen Ansatz 14 herabgezogen werden kann. Zwischen der zylindrischen Innenmantelfläche des Abdeckteiles 8 und der zylindrischen Außenmantelfläche des buchsenförmigen Ansatzes 14 ist wieder ein Raum 20 zur Aufnahme eines bevorzugt blattförmigen Informationsträgers 11 gebildet. In der Zeichnung erkennt man, daß der im Griffträger 12 gelagerte Handgriff 5 eine Sperre für die Zunge 28 bildet. Die Zunge 28 kann nicht in Richtung Innenraum des buchsenförmigen Ansatzes 14 gedrückt werden, weil sie im mit dem Abdeckteil 8 verriegelten Zustand auf der äußeren Mantelfläche des Handgriffes 5 aufliegt. Der Federweg der Zunge 28 wird dadurch begrenzt. Das Abdeckteil 8 kann in diesem Zustand nicht vom buchsenförmigen Ansatz 14 abgenommen werden. Der an der Außenmantelfläche des buchsenförmigen Ansatzes 14 befindliche Steg 26 bildet zwei Anschläge zur Lagefixierung des im Raum 20 befindlichen Informationsträgers 11. In Gebrauchslage des Griffträgers 12 befindet sich der Durchbruch 9 des Abdeckteiles 8 an der Unterseite des buchsenförmigen Ansatzes 14 und damit an der Unterseite des Griffträgers 12. Dadurch wird vermieden, daß Regenwasser durch den im Abdeckteil 8 befindlichen Durchbruch 9 in das Innere von Abdeckteil 8 und buchsenförmigen Ansatz 14 eindringen kann.

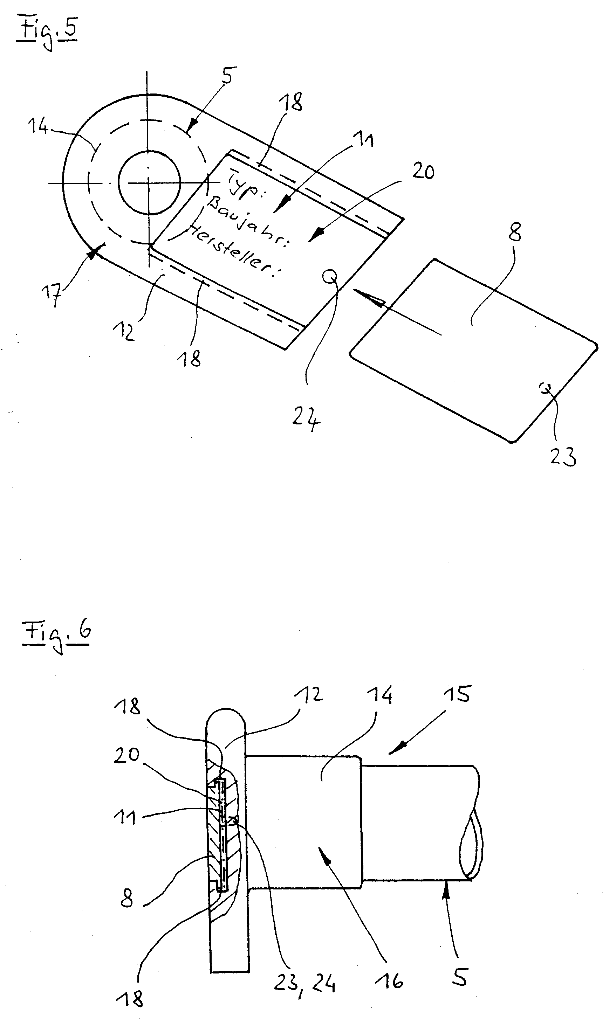

Bei dem in Fig. 5 gezeigten Ausführungsbeispiel ist der Informationsträger 11 in einem zwischen dem Griffträger 12 und dem Abdeckteil 8 befindlichen quaderähnlichen Raum 20 untergebracht, der sich entlang der äußeren, vom buchsenförmigen Ansatz 14 abgewandten, senkrechten Wandfläche 17 des Griffträgers 12 erstreckt. Der Pfeil verdeutlicht die Einschubrichtung des Abdeckteiles 8, das in zwei sich gegenüberliegend angeordneten Nuten 18 des Griffträgers 12 geführt ist. Damit das plattenförmige Abdeckteil 8 nicht verloren geht, ist es beispielsweise mit einem Vorsprung 23 ausgestattet, der nach Abschluß des Einschiebevorganges des Abdeckteiles 8 in eine an den Raum 20 sich anschließende, im Griffträger 12 befindliche Vertiefung 24 einrastet. Die Befestigung des Handgriffes 5 erfolgt in der bekannten gleichen Weise, wie in Fig. 3 beschrieben.

Ergänzend zeigt Fig. 6 in einem Schnitt den Griffträger 12 mit aufgesetztem Abdeckteil 8 entsprechend der Ausführung nach Fig. 4. Man erkennt den im Raum 20 befindlichen blattförmigen Informationsträger 11. Das Abdeckteil 8 ist in die Nuten 18 des Griffträgers 12 eingeschoben. Der Vorsprung 23 befindet sich in der Vertiefung 24 und verhindert damit ein selbsttätiges Lösen des Abdeckteiles 8 vom Griffträger 12 und damit auch ein Herausfallen des Informationsträgers 11 aus dem Raum 20. Das Abdeckteil 8 ist wiederum durchsichtig gestaltet, so daß der Informationsträger 11 lesbar bleibt. Der Handgriff 5 endet im Innenraum 15 des buchsenförmigen Ansatzes 14 und ist dort mittels der Spreizeinrichtung 16 befestigt.

Man wird gewöhnlich nur eine der beiden Griffkappen 12 wie vorab beschrieben gestalten bzw. mit einem Informationsträger 11 ausstatten. Dies schließt natürlich nicht aus, daß auch der gegenüberliegende Griffträger 12, sofern es zweckmäßig erscheint, für das Tragen eines Informationsträgers 11 genutzt werden kann. Ebenso sind Griffträger 12 denkbar, welche zusammen mit einem Abdeckteil 8 den erwähnten Raum 20 zur Aufnahme eines Informationsträgers 11 bilden, bei denen jedoch die Befestigung des Handgriffes 5 auf andere bewährte und bekannte Weise (z.B. mit einem Keilstück) erfolgt.

## Patentansprüche

1. Transportwagen (1), insbesondere Einkaufswagen, mit einem Fahrgestell (2), mit wenigstens einer Abstellfläche (3) z.B. in Form eines Behälters und/oder einer Ladeplattform und mit einer Schiebeeinrichtung (4) in Form eines rohr- oder stabförmigen Handgriffes (5), der an beiden Enden von je einem Griffträger (12) gehalten wird und die Griffträger (12) an je einem Tragteil (2a) befestigt sind und ein Informationsträger (11) vorgesehen ist, auf dem die zur Identifizierung des Transportwagens (1) erforderlichen Informationen wie Baujahr, Typbezeichnung, Eigentümer usw. angebracht sind, dadurch gekennzeichnet, daß wenigstens einer der beiden Griffträger (12) ein durchsichtiges Abdeckteil (8) aufweist, das unverlierbar auf den Griffträger (12) aufsetzbar ist und daß zwischen dem Griffträger (12) und dem aufgesetzten Abdeckteil (8) ein Raum (20) zur Aufnahme des Informationsträgers (11) gebildet ist.

2. Transportwagen, insbesondere Einkaufswagen, nach Anspruch 1, dadurch gekennzeichnet, daß das Abdeckteil (8) hohlzylinderförmig gestaltet ist und daß sich der Raum (20) zwischen der Außenmantelfläche des buchsenförmigen Ansatzes (14) des Griffträgers (12) und der Innenmantelfläche des auf den buchsenförmigen Ansatz (14) aufgesetzten Abdeckteiles (8) befindet.

3. Transportwagen, insbesondere Einkaufswagen, nach Anspruch 1 und/oder 2, dadurch gekennzeichnet, daß an der Außenmantelfläche des buchsenförmigen Ansatzes (14) und an der Innenmantelfläche des hohlzylinderförmigen Abdeckteiles (8) wenigstens je eine ringförmige, konzentrische Erhebung (21) und Vertiefung (22) zum gegenseitigen Einrasten vorgesehen sind.

4. Transportwagen, insbesondere Einkaufswagen, nach wenigstens einem der Ansprüche 1 bis 3, dadurch gekennzeichnet, daß an der Außenmantelfläche des buchsenförmigen Ansatzes (14) Anschläge zur Lagefixierung des Informationsträgers (11) vorgesehen sind.

5. Transportwagen, insbesondere Einkaufswagen, nach wenigstens einem der Ansprüche 1 bis 4, dadurch gekennzeichnet, daß am buchsenförmigen Ansatz (14) eine federnde Zunge (28) angeordnet ist, die mit einem Teil ihres Volumens zum Einrasten in einen am Abdeckteil (8) befindlichen Durchbruch (9) bestimmt ist.

6. Transportwagen, insbesondere Einkaufswagen, nach wenigstens einem der Ansprüche 1 bis 5, dadurch gekennzeichnet, daß die Zunge (28) parallel zur Längsachse (25) des Handgriffes (5) angeordnet ist.

7. Transportwagen, insbesondere Einkaufswagen, nach wenigstens einem der Ansprüche 1 bis 6, dadurch gekennzeichnet, daß die Zunge (28) an ihrem freien Ende (30) einen Vorsprung (23) aufweist.

8. Transportwagen, insbesondere Einkaufswagen, nach wenigstens einem der Ansprüche 1 bis 7, dadurch gekennzeichnet, daß ein am buchsenförmigen Ansatz (14) befindlicher Steg (26) zum Einfügen in eine an der zylindrischen Innenwand des Abdeckteiles (8) befindliche Nut (10) bestimmt ist.

9. Transportwagen, insbesondere Einkaufswagen, nach wenigstens einem der Ansprüche 1 bis 8, dadurch gekennzeichnet, daß der Federweg der Zunge (28) durch den in den Griffträger (12) eingefügten Handgriff (5) reduziert ist.

10. Transportwagen, insbesondere Einkaufswagen, nach wenigstens einem der Ansprüche 1 bis 9, dadurch gekennzeichnet, daß sich in montiertem Zustand des Abdeckteiles (8) dessen Durchbruch (9) an der Unterseite des buchsenförmigen Ansatzes (14) angeordnet ist.

11. Transportwagen, insbesondere Einkaufswagen, nach Anspruch 1, dadurch gekennzeichnet, daß der durch den Griffträger (12) und durch das aufgesetzte Abdeckteil (8) gebildete Raum (20) an der äußeren, vom buchsenförmigen Ansatz (14) abgewandten Wandfläche (17) des Griffträgers (12) angeordnet ist.

12. Transportwagen, insbesondere Einkaufswagen, nach Anspruch 1 und/oder 11, dadurch gekennzeichnet, daß das Abdeckteil (8) plattenförmig gestaltet und in Nuten (18) des Griffträgers (12) verschiebbar geführt ist.

13. Transportwagen, insbesondere Einkaufswagen, nach wenigstens einem der Ansprüche 1, 11 oder 12, dadurch gekennzeichnet, daß das Abdeckteil (8) mit einem Vorsprung (23) ausgestattet ist, der zum Einrasten in eine am Griffträger (12) befindliche Vertiefung (24) vorgesehen ist.

## Claims

1. A transporting trolley (1), in particular a shopping trolley, having a chassis (2), having at least one depositing area (3), e.g. in the form of a container and/or a load platform, and having a pushing device (4) in the form of a tubular or bar-shaped handle (5) which is held at either end by a respective handle bearer (12) each of which is secured to a respective bearing part (2a) and there is provided an information bearer (11) on which there is fastened the information required to identify the transporting trolley (1), such as year of construction, model name, owner etc., characterised in that at least one of the two handle bearers (12) has a transparent cover part (8) which can be placed onto the handle bearer (12) in such a manner that it cannot be mislaid, and in that a space (20) for receiving the information bearer (11) is formed between the handle bearer (12) and the attached cover part (8).

2. A transporting trolley, in particular a shopping trolley, in accordance with Claim 1, characterised in that the cover part (8) is the shape of a hollow cylinder, and in that the space (20) is located between the outer surface of the sleeve-shaped attachment (14) of the handle bearer (12) and the inner surface of the cover part (8) placed onto the sleeve-shaped attachment (14).

3. A transporting trolley, in particular a shopping trolley, in accordance with Claim 1 and/or 2, characterised in that the outer surface of the sleeve-shaped attachment (14) and the inner surface of the hollow-cylinder-shaped cover part (8) each have provided thereon at least one annular concentric prominence (21) and depression (22) - to engage with one another.

4. A transporting trolley, in particular a shopping trolley, in accordance with at least one of Claims 1 to 3, characterised in that stops for fixing the position of the information bearer (11) are provided on the outer surface of the sleeve-shaped attachment (14).

5. A transporting trolley, in particular a shopping trolley, in accordance with at least one of Claims 1 to 4, characterised in that a resilient tongue (28) is arranged on the sleeve-shaped attachment (14), this tongue (28) being intended to engage with part of its volume in an opening (9) located in the cover part (8).

6. A transporting trolley, in particular a shopping trolley, in accordance with at least one of Claims 1 to 5, characterised in that the tongue (28) is arranged parallel to the longitudinal axis (25) of the handle (5).

7. A transporting trolley, in particular a shopping trolley, in accordance with at least one of Claims 1 to 6, characterised in that the tongue (28) has a projection (23) at its free end (30).

8. A transporting trolley, in particular a shopping trolley, in accordance with at least one of Claims 1 to 7, characterised in that a fillet (26) located on the sleeve-shaped attachment (14) is intended for insertion into a groove (10) located in the cylindrical inner wall of the cover part (8).

9. A transporting trolley, in particular a shopping trolley, in accordance with at least one of Claims 1 to 8, characterised in that the resilient displacement of the tongue (28) is decreased by the handle (5) inserted in the handle bearer (12).

10. A transporting trolley, in particular a shopping trolley, in accordance with at least one of Claims 1 to 9, characterised in that in the mounted state of the cover part (8), the opening (9) of the latter is arranged at the lower side of the sleeve-shaped attachment (14).

11. A transporting trolley, in particular a shopping trolley, in accordance with Claim 1, characterised in that the space (20) formed by the handle bearer (12) and by the attached cover part (8) is arranged at the outer handle-bearer wall surface (17) which is facing away from the sleeve-shaped attachment (14).

12. A transporting trolley, in particular a shopping trolley, in accordance with Claim 1 and/or 11, characterised in that the cover part (8) is plate-shaped and is displaceably guided in grooves (18) of the handle bearer (12).

13. A transporting trolley, in particular a shopping trolley, in accordance with at least one of Claims 1, 11 or 12, characterised in that the cover part (8) is equipped with a projection (23) provided for the purpose of engaging into a depression (24) located in the handle bearer (12).

## Revendications

1. Chariot de transport (1), notamment chariot à provisions, avec un châssis (2), au moins une surface de chargement (3), par exemple sous la forme d'un récipient et/ou d'une plate-forme de chargement, et un dispositif de poussée (4) sous la forme d'une poignée (5) en forme de tube ou de barre qui est maintenue aux deux extrémités par un support de poignée respectif (12), les supports de poignée (12) étant chacun fixés à une partie porteuse (2a) et un support d'informations (11) étant prévu, sur lequel sont portées les informations nécessaires pour l'identification du chariot de transport (1), telles que l'année de construction, la désignation du type, le propriétaire, etc., **caractérisé** en ce qu'au moins un des deux supports de poignée (12) présente un élément de recouvrement transparent (8) qui est monté de façon imperdable sur le support de poignée (12), et en ce qu'un espace (20) pour recevoir le support d'informations (11) est formé entre le support de poignée (12) et l'élément de recouvrement (8) monté sur ce dernier.

2. Chariot de transport, notamment chariot à provisions selon la revendication 1, **caractérisé** en ce que l'élément de recouvrement (8) est configuré en forme de cylindre creux, et en ce que l'espace (20) se trouve entre la surface d'enveloppe extérieure de l'appendice (14) en forme de manchon du support de poignée (12) et la surface d'enveloppe intérieure de l'élément de recouvrement (8) monté sur l'appendice (14) en forme de manchon.

3. Chariot de transport, notamment chariot à provisions selon la revendication 1 et/ou 2, **caractérisé** en ce qu'au moins un bossage (21) et un renfoncement (22), annulaires, concentriques et destinés à s'enclencher l'un dans l'autre, sont respectivement prévus sur la surface d'enveloppe extérieure de l'appendice (14) en forme de manchon et sur la surface d'enveloppe intérieure de l'élément de recouvrement (8) en forme de cylindre creux.

4. Chariot de transport, notamment chariot à provisions selon au moins une des revendications 1 à 3, **caractérisé** en ce que des butées sont prévues, pour la fixation en position du support d'informations (11), sur la surface d'enveloppe extérieure de l'appendice (14) en forme de manchon.

5. Chariot de transport, notamment chariot à provisions selon au moins une des revendications 1 à 4, **caractérisé** en ce qu'une languette élastique (28) est disposée sur l'appendice (14) en forme de manchon, laquelle est destinée à s'enclencher par une partie de son volume dans un ajour (9) pratiqué sur l'élément de recouvrement (8).

6. Chariot de transport, notamment chariot à provisions selon au moins une des revendications 1 à 5, **caractérisé** en ce que la languette (28) est disposée parallèlement à l'axe longitudinal (25) de la poignée (5).

7. Chariot de transport, notamment chariot à provisions selon au moins une des revendications 1 à 6, **caractérisé** en ce que la languette (28) présente une saillie (23) à son extrémité libre (30).

8. Chariot de transport, notamment chariot à provisions selon au moins une des revendications 1 à 7, **caractérisé** en ce qu'une nervure (26) présente sur l'appendice (14) en forme de manchon est destinée à s'insérer dans une rainure (10) présente sur la paroi intérieure cylindrique de l'élément de recouvrement (8).

9. Chariot de transport, notamment chariot à provisions selon au moins une des revendications 1 à 8, **caractérisé** en ce que la course élastique de la languette (28) est limitée par la poignée (5) insérée dans les supports de poignée (12).

10. Chariot de transport, notamment chariot à provisions selon au moins une des revendications 1 à 9, **caractérisé** en ce qu'à l'état monté de l'élément de recouvrement (8), son ajour (9) est disposé sur le dessous de l'appendice (14) en forme de manchon

11. Chariot de transport, notamment chariot à provisions selon la revendication 1, **caractérisé** en ce que l'espace (20) formé par le support de poignée (12) et par l'élément de recouvrement (8) monté sur ce dernier, est disposé sur la face de paroi extérieure (17) du support de poignée (12), opposée à l'appendice (14) en forme de manchon.

12. Chariot de transport, notamment chariot à provisions selon la revendication 1 et/ou 11, **caractérisé** en ce que l'élément de recouvrement (8) est configuré en forme de plaque et est guidé à coulissement dans des rainures (18) du support de poignée (12).

13. Chariot de transport, notamment chariot à provisions selon au moins une des revendications 1, 11 ou 12, **caractérisé** en ce que l'élément de recouvrement (8) est doté d'une saillie (23) qui est destinée à s'enclencher dans un renfoncement (24) présent sur le support de poignée (12).
